# EUROPÄISCHE PATENTSCHRIFT

(11) **EP 1 483 521 B1**
(45) Veröffentlichungstag und Bekanntmachung des Hinweises auf die Patenterteilung: **03.05.2006**
(21) Anmeldenummer: 03704152.2
(22) Anmeldetag: 11.03.2003
(51) Int. Cl.: F16L 19/08, F16L 13/12, F16L 13/00, F16L 21/08, F16L 37/02, F16L 33/00

(54) **ROHRVERBINDUNG**
PIPE CONNECTION
RACCORD DE TUYAUTERIE

(30) Priorität: 12.03.2002 CH 42002
(43) Veröffentlichungstag der Anmeldung: 08.12.2004
(73) Patentinhaber: Contec Fluidsysteme GmbH & Co.KG, 8266 Steckborn (CH)
(72) Erfinder: GÖTZ, Thomas, 88709 Hagnau (DE)
(74) Vertreter: Wenger, René
(86) Internationale Anmeldenummer: PCT/CH2003/000160
(87) Internationale Veröffentlichungsnummer: WO 2003/076839

(56) Entgegenhaltungen:
- EP-A- 0 205 170
- GB-A- 1 195 723
- GB-A- 1 466 137
- GB-A- 2 129 080
- US-A- 2 459 608
- US-A- 2 757 945
- US-A- 3 365 219
- US-A- 3 697 102
- US-A- 3 985 379
- US-A- 5 816 627

## Beschreibung

Bei der vorliegenden Erfindung handelt es sich um ein neues Rohrverbindungssystem, das auf einem dichtenden Presssystem, beispielsweise auf einem metallisch dichtenden Presssystem basiert. Der Grundgedanke der Erfindung ist, Rohre aus metallischen Werkstoffen oder aus Kunststoffmaterialien dichtend zu verbinden, ohne auf den Einsatz der bekannten Schweiss-, Lot-, Schraub-Dicht-Verfahren oder bereits bekannten Pressfittingsystemen angewiesen zu sein.

Die Idee, Rohrleitungen unter Verzicht der konventionellen Verfahren wie Löten, Schweissen etc. zu verbinden ist an sich bekannt. Beispielsweise beschreibt die EP-A-848 200 ein metallisch dichtendes System zum Verbinden von Rohrleitungselementen mittels eines Quetschringsystems. Hier erfolgt die umfängliche Krafteinleitung von aussen auf die Rohrleitung, welche dann eine Verformung der Leitung sowie der entsprechend angebrachten Verformungselemente und damit eine metallisch dichtende und bleibende Verbindung von Rohrleitungselementen bewirkt.

Durch die GB 1 195 723 ist eine flüssigkeitsdichte Rohrverbindung zwischen einem Rohrabschnitt und einer Muffe bekannt geworden, bei der in der Muffe ein den Rohrabschnitt umschliessender elastischer Dichtungsring sowie über dem Dichtungsring eine zunächst konische Ringscheibe gehalten ist. Die Ringscheibe liegt dabei an ihrem Aussenumfang im Bereich des Dichtungsrings auf einer Schulter auf. Die Ringscheibe wird mittels einer über den Rohrabschnitt geschobenen und in die Muffe eingeschraubten Nuss derart deformiert, dass der Dichtungsring in Dichtposition deformiert wird und dass sich die Ringscheibe in den Aussenmantel des Rohrabschnitts eingräbt.

Durch die gattungsbildende US 2,757,945 ist ausserdem eine dichtende Rohrverbindung zwischen einem Rohrabschnitt und einer Muffe bekannt geworden, bei der ebenfalls eine zunächst konische Ringscheibe durch Aufbringen einer Presskraft zwischen der Muffe und dem Rohrabschnitt verspannt wird. Der Rohrabschnitt hat jedoch einen Aussendurchmesser, der dem Innendurchmesser der Muffe entspricht und sowohl am Rohrabschnitt als auch an der Muffe ist je eine umlaufende Nur zur Aufnahme der Ringscheibe im plastisch deformierten Zustand vorgesehen.

All diesen, zum Teil am Markt schon etablierten Konzepten ist gemeinsam, dass die zu verbindenden Leitungen durch erhebliche Kräfte verformt, also im Durchmesser verändert werden müssen, um ein Aufliegen bzw. Andrücken an die radial umlaufenden Dichtelemente zu erreichen. In der Regel muss sogar erreicht werden, dass sich die entsprechenden Dichtelemente in die Rohrleitung regelrecht einschneiden müssen. Als bestes Beispiel hierfür sei die klassische Schneidringverschraubung genannt. Nachteilig bei all diesen Konzepten ist allgemein, dass mit sehr hohen Verformungskräften gearbeitet werden muss, da eine Durchmesseränderung des zu verbindenden Rohres erreicht werden muss. Die hierfür benötigten Werkzeuge sind dann entsprechend massiv gestaltet und unter Umständen sehr unhandlich und umständlich zu bedienen.

Gleichzeitig muss erwähnt werden, dass die betreffenden Verbindungskonzepte konstruktiv sehr aufwendig gestaltet werden müssen, was einen sehr hohen Fertigungsaufwand in der Herstellung zur Folge hat. Demzufolge sind diese Produkte in der Regel sehr teuer.

Es ist daher Aufgabe der Erfindung, eine wesentlich vereinfachte Rohrverbindung zu schaffen. Diese Aufgabe wird mit einer Rohrverbindung gemäss Anspruch 1 gelöst.

Bei der vorgeschlagenen Idee handelt es sich um ein metallisch oder materialtechnisch anderweitig dichtendes Presssystem zum Verbinden von Rohrleitungselementen in den verschiedensten technischen Bereichen.

Die vorliegende Erfindung basiert darauf, Dichtscheiben oder Dichtringe derart konstruktiv zu gestalten, dass durch Aufbringung einer äusseren Presskraft eine Durchmesservergrösserung am äusseren wie auch eine Durchmesserverkleinerung am inneren Durchmesser erreicht wird.

Die vorliegende Erfindung wird nachstehend anhand von nicht einschränkenden Zeichnungen genauer erläutert. Es zeigen:
- Fig. 1a: ein Beispiel eines unverformten Dichtscheibenelements gemäss der vorliegenden Erfindung
- Fig. 1b: ein Beispiel eines verformten Dichtscheibenelements gemäss der vorliegenden Erfindung
- Fig. 1C: ein Beispiel eines unverformten Dichtscheibenelements mit gleichsinniger Anordnung der Randbereiche der Scheibe
- Fig. 2: ein Beispiel einer Rohr-Rohr-Verbindungseinheit in einer Ausführungsvariante mit zwei Dichtscheiben umfas- send unverformte Dichtscheibenelemente gemäss der vorliegenden Erfindung
- Fig. 3: ein Beispiel einer Rohr-Rohr-Verbindungseinheit in einer Ausführungsvariante mit zwei Dichtscheiben umfassend verformte Dichtscheibenelemente gemäss der vorliegenden Erfindung
- Fig. 4: ein Beispiel einer Rohr-Rohr-Verbindungseinheit in einer Ausführungsvariante mit zwei verformten Dicht scheibenelementen gemäss der vorliegenden Erfindung, umfassend ein Kunststoffrohr und ein Stützrohr
- Fig. 5: ein Beispiel einer Rohr-Rohr-Verbindungseinheit in einer Ausführungsvariante mit zwei verformten Dichrscheibenelementen gemäss der vorliegenden Erfindung, umfassend ein Kunststoffrohr und ein als Teil einer Muffe angeordnetes Stützrohr
- Fig. 6A: ein Stützrohr mit einer Stegkontur (10)
- Fig. 6B: ein Stützrohr mit einer Stegkontur (10) und einem Dichtkegel (11)
- Fig. 7: eine Ausführungsform eines Sperrelements für die erfindungsgemässe Rohrverbindung

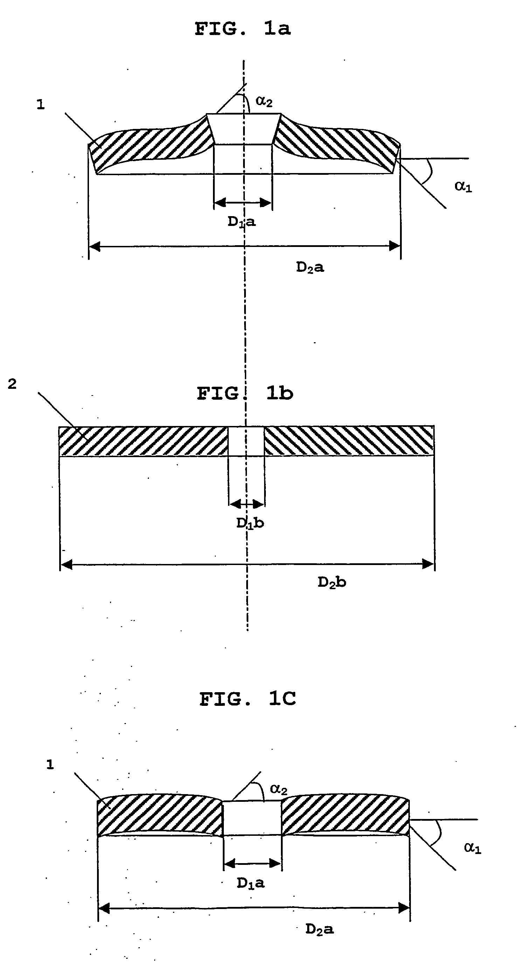

Fig. 1a zeigt ein beliebiges unverformtes Dichtscheibenelement 1, stellvertretend für die unterschiedlichsten Scheibenformen. Das Dichtscheibenelement 1 weist einen Innendurchmesser D1a und einen Aussendurchmesser D2a auf.

Fig. 1b zeigt die verformte Dichtscheibe 2 und die erzielte Durchmesseränderung nach der plastischen Verformung der Scheibe durch eine äussere Presskraft. Der Innendurchmesser D1b der verformten Dichtscheibe 2 ist geringer als der Innendurchmesser D1a des Dichtscheibenelements 1, während der Aussendurchmesser D2b der verformten Dichtscheibe 2 grösser als der Aussendurchmesser D2a des Dichtscheibenelements 1 ist.

Erwähnt sei an dieser Stelle, dass durch Variation der Durchmesser D1a und D2a sowie der Verformungswinkel α₁ und α₂ die Durchmesseränderung und somit die Dichtwirkung der Anordnung in weiten Grenzen eingestellt werden kann.

Wie dargestellt sind die Randbereiche der Scheibe vorzugsweise gegensinnig gekrümmt. Dies führt dazu, dass bei einer Verformung durch Pressen die sich einander gegenüberliegenden inneren Randbereiche des Dichtscheibenelements annähern. Es kommt somit zu einer Verringerung des Innendurchmessers des Dichtscheibenelements. Andererseits werden bei einer Verformung durch Pressen die nach aussen weisenden Randbereiche des Dichtscheibenelements noch weiter nach aussen bewegt. Es kommt somit zu einer Vergrösserung des Aussendurchmessers des Dichtscheibenelements. Auf diese Wiese kommt es nach dem Verformungsschritt zwischen der Dichtscheibe und Rohren, die sich an den inneren und äusseren Randbereich des Dichtscheibenelements anschliessen, zu einer kraftschlüssigen und dichtenden Verbindung. Es sind aber noch andere Arten der erfindungsgemässen Rohrverbindung denkbar, die auf dem Prinzip der Verringerung des Innendurchmessers und der Vergrösserung des Aussendurchmessers durch Pressen beruhen, und die durch eine entsprechende geometrische Gestaltung des Dichtscheibenelements realisiert werden können. Beispielhaft ist in Fig. 1C ein unverformtes Drehscheibenelement (1) mit gleichsinniger Anordnung der Randbereiche der Scheibe gezeigt.

Erfindungsgemäss ist das Dichtscheibenelement kreisförmig um ein Rohr angeordnet, so dass es das Rohr über einen bestimmten Abschnitt vollständig umschliesst. Der Fachmann kann die Ausgestaltung des erfindungsgemässen Dichtscheibenelements entsprechend den jeweiligen Applikationserfordernissen problemlos wählen.

Das erfindungsgemässe Dichtscheibenelement kann aus jedem Material gefertigt sein, welches die erforderlichen Eigenschaften, insbesondere Fliessverhalten aufweist. Beispielsweise kann das Dichtscheibenelement aus üblicherweise für derartige Zwecke verwendeten Materialien wie Metallen oder Kunststoffen gefertigt sein. Erfindungsgemäss ist das Dichtscheibenelement aus einem plastisch verformbaren Material, insbesondere aus Stahl, Leichtmetall (Aluminium), Buntmetall (z.B. Kupfer) oder Legierungen (z.B. Messing) oder aus Kunststoff wie beispielsweise Polyethylen gefertigt. Gleichfalls einsetzbar sind Verbundmaterialien wie Kunststoff/Metall-Materialien. Auch entsprechend beschichtete Materialien wie mit Kunststoff beschichtete Stahl- oder NE-Materialien können verwendet werden.

Die Herstellung des erfindungsgemässen Dichtscheibenelements erfolgt nach gängigen, dem Fachmann bekannten Methoden.

Die Dimensionen des Dichtscheibenelements wie z.B. Scheibendicke und Kröpfungswinkel werden entsprechend den Anwendungserfordernissen gewählt.

Die Verformung des erfindungsgemässen Dichtscheibenelements kann durch Standardpresswerkzeuge wie beispielsweise einer hydraulischen Presse oder einer elektro-hydraulischen Presse erfolgen. Gegebenenfalls muss das Presswerkzeug in Abhängigkeit der Dimensionen des Dichtscheibenelements mit entsprechend angepassten Einsätzen bestückt werden. Diese Einsätze können auf übliche, dem Fachmann bekannte Weise angefertigt werden.

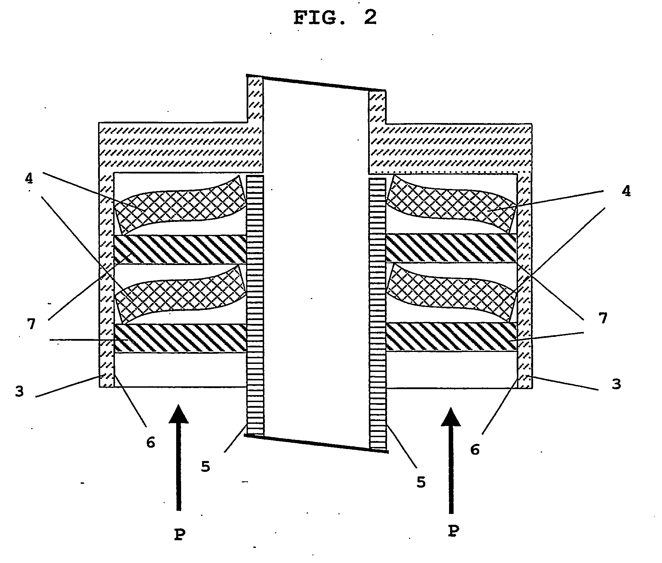

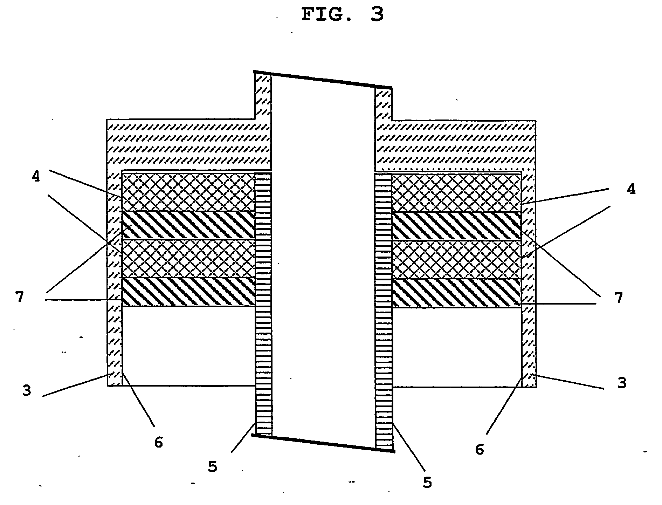

Durch Kombination der beschriebenen Dichtscheibenelemente mit beispielsweise entsprechenden Dichtmuffen 3, angepasst auf einen bestimmten Rohrdurchmesser, erhält man wie in Fig. 2 beispielhaft dargestellt eine Rohr-Rohr-Verbindungseinheit. Die Verbindungseinheit weist vor Aufbringung einer äusseren Presskraft P unverformte Dichtscheibenelemente 4 auf. Die Einleitung einer Presskraft P wie in Fig. 1 beschrieben führt nun zu einer Veränderung des Aussen- sowie Innendurchmessers der Dichtscheibenelemente und damit zu einer Einarbeitung des Scheibenmaterials in die Oberfläche 5 der zu verbindenden Rohrteile sowie aussenseitig in die Muffenoberfläche 6 der Verbindungseinheit, mit dem Resultat der Ausbildung einer bleibend, wenn gewünscht metallisch dichtenden Rohr-Rohrverbindung. Der so erreichte verpresste Zustand dieser Rohrverbindungseinheit ist in Fig. 3 dargestellt.

In Fig. 2 und 3 dargestellt sind zwei Dichtscheibenelemente 4 und zwei Pressscheibenelemente, hier Distanzscheiben 7, welche die Aufgabe besitzen, die mittels einem Werkzeug aufgebrachte Axialkraft P auf die Dichtscheibenelemente 4 zu übertragen und somit die Verformung dieser Dichtscheibenelemente 4 zu erreichen. Je nach Anwendungsfall sind gegebenenfalls der Einsatz von einer, zwei, drei oder wenn erforderlich mehrerer Dichtscheibenelemente und Distanzscheiben möglich. Durch eine Variation der Anzahl an verwendeten Dichtscheibenelementen sowie deren Geometrien (Durchmesserverhältnis, Scheibendicke) können die Torsions- und/oder Biegeeigenschaften der erfindungsgemässen Rohrverbindung optimiert werden. Es hat sich beispielsweise gezeigt, dass eine erfindungsgemässe Rohrverbindung mit zwei metallischen Dichtscheibenelementen einem Druck von 90 bar über einen längeren Zeitraum standhalten kann.

Die Muffe 3 ist vorzugsweise als einstückige, spiegelbildliche Doppelmuffe ausgebildet, die zwei Rohrenden miteinander verbindet.

Erwähnenswert sind die Möglichkeiten einer weitreichenden Variation der eingesetzten Materialkomponenten bei den Dichtscheibenelementen sowie der Rohrmaterialien und der Muffe. Denkbar bei den gängigen Rohrmaterialien sind generell Stahlmaterialien genauso wie NE-Metallmaterial, Legierungen oder auch Kunststoffmaterial wie beispielsweise Polyethylen oder Polytetrafluorethylen (Teflon) sowie Verbundrohre aus Kunststoff- und Metallmaterialien. Beispielhaft für Kunststoffrohre seien PEX®-Rohre genannt. Für die Dichtscheibenelemente können die vorstehend beschriebenen Materialien eingesetzt werden.

Die eingesetzten Materialien werden entsprechend den Applikationserfordernissen ausgewählt. So werden beispielsweise für Rohrverbindungen im Schiffsbau oder für Gasleitungsrohre erfindungsgemässe Verbindungen bevorzugt, bei denen sowohl die Rohre als auch die Dichtscheibenelemente aus metallischem Material gefertigt sind. Für Applikationen, bei denen nicht so hohe Anforderungen an die Dichtigkeit zu stellen sind, wie beispielsweise in der Gebäudeinstallation, können die Rohre und/oder die Dichtscheibenelemente aus Kunststoff oder Kunststoffverbundmaterialien gefertigt sein.

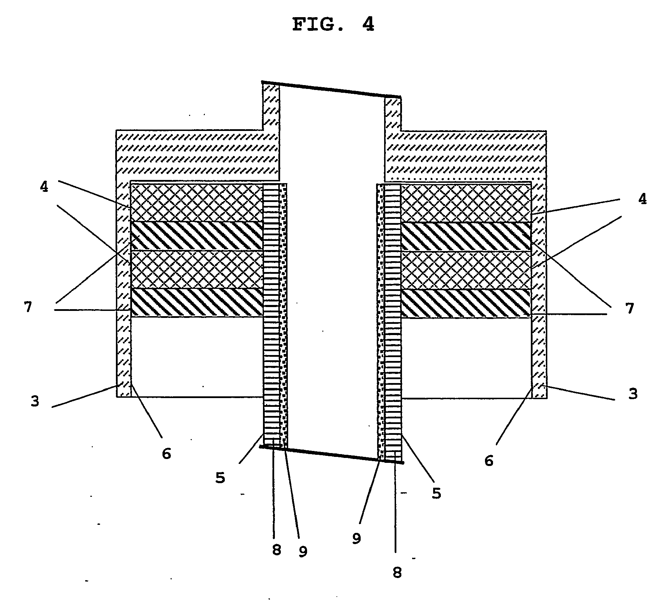

Wenn ein Rohr aus einem weniger belastbaren Material wie beispielsweise Kunststoff erfindungsgemäss verbunden werden soll, wird vorzugsweise das Rohr von innen abgestützt. Hierfür kommen insbesondere Stützrohre oder Stützhülsen aus einem Material in Frage, das den bei der erfindungsgemässen Verbindung auftretenden Kräften standhält. In Fig. 4 ist eine Rohrverbindung gezeigt, bei welcher innerhalb des Kunststoffrohrs 8 ein Stützrohr 9 bereitgestellt ist. In Fig. 4 sind die Dichtscheibenelemente 4 im verpressten Zustand dargestellt. Hinsichtlich des unverpressten Zustands und des Verformungsvorgangs wird auf die Ausführungen zu Fig. 2 und 3 verwiesen, die für die in Fig. 4 gezeigte Ausführungsform analog zutreffen.

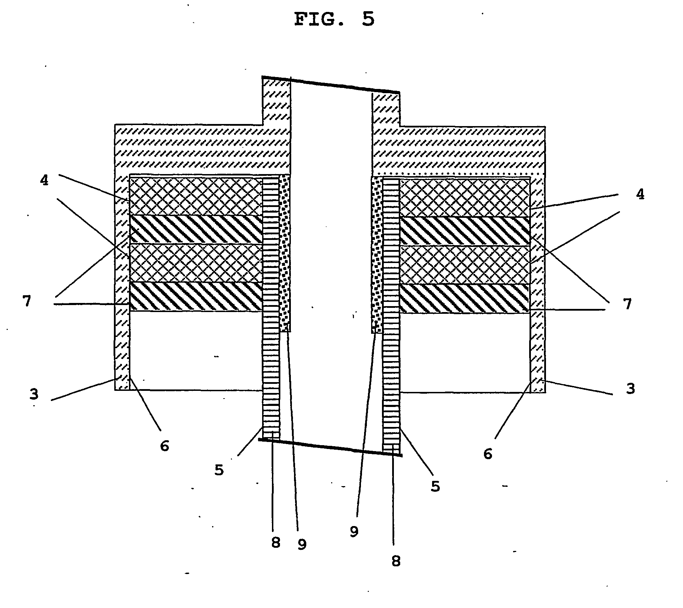

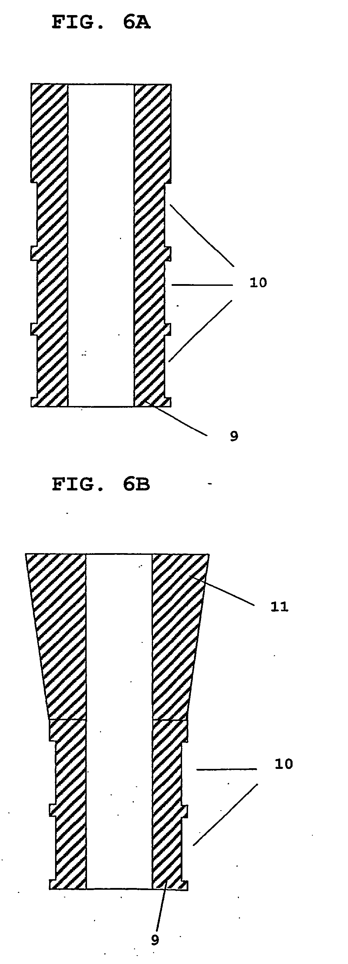

Eine andere Ausführungsform der erfindungsgemässen Rohrverbindung mit Stützrohr ist in Fig. 5 dargestellt. Hierbei ist das Stützrohr 9 der Einheit als Teil des Muffenelements 3 ausgestaltet, d.h. die Muffe 3 und das Stützrohr 9 sind formschlüssig miteinander verbunden. Für besondere Anwendungen, beispielsweise für die Erzeugung besonders hoher Formschlüssigkeiten oder einer besonders dichtenden Verbindung, kann das Stützrohr mit einer entsprechenden Kontur versehen sein, über die das Rohr aus beispielsweise Kunststoff oder Kunststoffverbundmaterial geschoben wird. Entsprechend ausgelegte Konturen sind aus dem Stand der Technik für die jeweiligen Anwendungsarten bekannt. Beispielhaft sind in Fig. 6A und 6B Stützrohre 9 mit einer Stegkontur 10 beziehungsweise einer Stegkontur 10 und einem Dichtkegel 11 gezeigt.

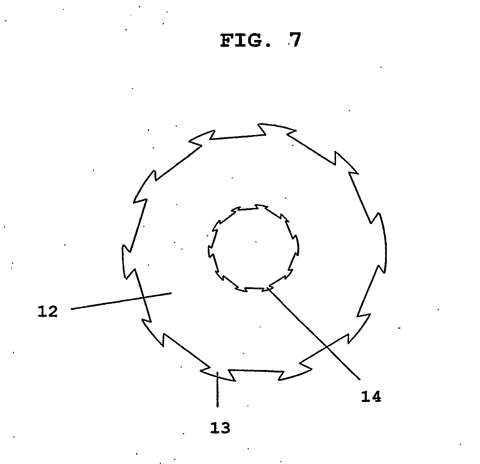

Im Falle von hohen äusseren Biege- oder Torsionsbeanspruchungen ist es möglich, dass die Kraftaufnahme durch die eingesetzten Dichtscheibenelemente sowie Pressscheibenelemente nicht ausreichend ist. In einem solchen Fall kann zusätzlich zu den Dichtsowie Pressscheibenelementen ein weiteres Element eingesetzt werden, das explizit für die Aufnahme von Biege-, Zug- und Torsionskräften ausgelegt ist. Entsprechende Rohrfixierelemente sind in der Fachwelt bekannt und sollen im Rahmen der vorliegenden Erfindung nicht weiter diskutiert werden. Beispielhaft ist in Fig. 7 ein Sperrelement 12 gezeigt. Dieses Sperrelement 12 weist auf seinem äusseren und inneren Umfang Sperrnasen 13 und 14 auf, welche ebenfalls abgewinkelt sein können. Während des Verpressvorgangs stellen sich die sperrnasen 13 und 14 auf und verkrallen sich somit in das Rohr 8 beziehungsweise in die Muffe 3. Dadurch wird zwischen beiden Elementen eine feste mechanische Verbindung hergestellt. Ein oder mehrere Sperrelemente 12 werden erfindungsgemäss bevorzugt unterhalb der erfindungsgemässen Dichtelemente eingesetzt.

Die Herstellung der Bauteile erfolgt über gängige, dem Fachmann bekannte Methoden. Kunststoffbauteile können beispielsweise über Spritzgussverfahren hergestellt werden.

Falls erforderlich oder gewünscht, können die Bauteile weiteren Bearbeitungsschritten unterworfen werden, um die Eigenschaften der Bauteile positiv zu beeinflussen. So können metallische Materialien oder Legierungsmaterialien gefestigt oder gehärtet werden, beispielsweise durch Erwärmen und anschliessendes Abkühlen. Ebenfalls ist bei Stahlmaterialien und einigen NE-Metallen ein entsprechender Glühprozess für eine Steigerung der Duktilität anwendbar. Die Materialien können auch beschichtet werden, beispielsweise um die Chemikalienresistenz von Kunststoffmaterialien zu erhöhen. Auf diese Weise können die Materialien an die entsprechende Anwendung angepasst werden, beispielsweise an Niederdruck- oder Hochdruckapplikationen. Die entsprechenden Bearbeitungsverfahren sind dem Fachmann wohlbekannt.

Stellvertretend für die in Fig. 2 und 3 abgebildete gerade Rohrverbindung sind selbstverständlich alle, in der Rohrleitungsverlegetechnik benötigten Fittingelemente wie Bogenstücke mit unterschiedlichem Winkel, Reduzierstücke, Muffen, Wandscheiben, T-Abgänge, Kreuzabgänge sowie Abgänge mit Gewindeanschlüssen möglich.

Die erfindungsgemässen Rohrverbindungen sind auf allen technischen Gebieten einsetzbar. Beispielhaft seien der Schiffsbau, die Automobilindustrie oder die Gebäudeinstallation genannt. Im weitesten Sinne kann das erfindungsgemäss beschriebene Rohrverbindungssystem unabhängig vom Medium für alle denkbaren fluidführenden Rohrleitungssysteme Anwendung finden. Wie vorstehend beschrieben kann die Verbindung auf einfache, schnelle und sichere Art hergestellt werden, ohne dass es hierfür eines teuren Spezialwerkzeugs bedarf.

## Patentansprüche

1. Rohrverbindung zwischen dem Aussenmantel (5) eines Rohrabschnitts und dem Innenmantel (6) einer über den Rohrabschnitt schiebbaren Muffe (3) mit wenigstens einem kreisringförmigen Dichtscheibenelement (4) aus einem plastisch verformbaren Material, welches durch Aufbringen einer Presskraft: (P) zwischen dem Aussenmantel (5) des Rohrabschnitts und dem Innenmantel (6) der Muffe (3) dichtend verspannbar ist, **dadurch gekennzeichnet,**
- **dass** das Dichtscheibenelement (4) einen äusseren Randbereich und einen inneren Randbereich aufweist, welche Randbereiche gleichsinnig oder gegensinnig gekrümmt sind,
- wobei mittels eines Presswerkzeugs derart eine äussere Presskraft (P) auf das Dichtscheibenelement (4) aufbringbar ist, dass es eine innenseitige Durchmesserverkleinerung und eine aussenseitige Durchmesservergrösserung erhält,
- und wobei das Dichtscheibenelement (4) mittels eines Pressscheibenelements (7) mit der Presskraft beaufschlagbar ist.

2. Rohrverbindung nach Anspruch 1, **dadurch gekennzeichnet, dass** mehrere Dichtscheibenelemente (4) getrennt durch Pressscheibenelemente (7) ein Dichtpaket bilden.

3. Rohrverbindung nach Anspruch 1 oder 2, **dadurch gekennzeichnet, dass** das Dichtscheibenelement aus Stahl, Leichtmetall wie Aluminium, Buntmetall wie Kupfer oder Legierungen wie Messing oder aus Kunststoff gefertigt ist.

4. Rohrverbindung nach einem der Ansprüche 1 bis 3, **dadurch gekennzeichnet, dass** der Rohrabschnitt und/oder die Muffe aus einem Metall, einer Legierung oder aus einem Kunststoff gefertigt ist.

5. Rohrverbindung nach einem der Ansprüche 1 bis 4, **dadurch gekennzeichnet, dass** mindestens der Rohrabschnitt von innen abgestützt ist.

6. Rohrverbindung nach Anspruch 5, **dadurch gekennzeichnet, dass** das Abstützen durch Bereitstellung eines Stützrohres oder einer Stützhülse (9) erfolgt.

7. Rohrverbindung nach einem der Ansprüche 1 bis 6, **dadurch gekennzeichnet, dass** die Muffe (3) als einstückige, spiegelbildliche Doppelmuffe ausgebildet ist.

8. Rohrverbindung nach einem der Ansprüche 1 bis 7, **dadurch gekennzeichnet, dass** zusätzlich zum Dichtscheibenelement (4) und zum Pressscheibenelement (7) ein Sperrelement (12) zwischen die Muffe (3) und den Rohrabschnitt eingepresst ist.

## Claims

1. Pipe connection between the outer lateral surface (5) of a pipe section and the inner lateral surface (6) of a socket (3) which can be pushed over the pipe section, having at least one circular-ring-shaped sealing disc element (4) which is made of a plastically deformable material and can be restrained in a sealing manner between the outer lateral surface (5) of the pipe section and the inner lateral surface (6) of the socket (3) by application of a pressing force (P), **characterized in that**
- the sealing disc element (4) has an outer marginal region and inner marginal region which are curved in the same direction or in opposite directions,
- it being possible for an external pressing force (P) to be applied to the sealing disc element (4) by means of a pressing tool in such a way that it is reduced in diameter on the inside and increased in diameter on the outside,
- and it being possible for the pressing force to be applied to the sealing disc element (4) by means of a pressing disc element (7).

2. Pipe connection according to Claim 1, **characterized in that** a plurality of sealing disc elements (4) separated by pressing disc elements (7) form a sealing stack.

3. Pipe connection according to Claim 1 or 2, **characterized in that** the sealing disc element is produced from steel, light metal such as aluminium, non-ferrous metal such as copper, or alloys such as brass, or plastic.

4. Pipe connection according to one of Claims 1 to 3, **characterized in that** the pipe section and/or the socket is produced from a metal, an alloy or a plastic.

5. Pipe connection according to one of Claims 1 to 4, **characterized in that** at least the pipe section is supported from inside.

6. Pipe connection according to Claim 5, **characterized in that** the support is effected by providing a supporting pipe or a supporting sleeve (9).

7. Pipe connection according to one of Claims 1 to 6, **characterized in that** the socket (3) is designed as a one-piece, mirror-image double socket.

8. Pipe connection according to one of Claims 1 to 7, **characterized in that**, in addition to the sealing disc element (4) and the pressing disc element (7), a locking element (12) is pressed in place between the socket (3) and the pipe section.

## Revendications

1. Raccord de tuyauterie entre l'enveloppe extérieure (5) d'un tronçon de tuyau et l'enveloppe intérieure (6) d'un manchon (3) apte à être enfilé sur le tronçon de tuyau, avec au moins un élément annulaire formant rondelle d'étanchéité (4) en matière déformable plastiquement qui est apte à être serré de manière étanche grâce à l'application d'une force de pression (P) entre l'enveloppe extérieure (5) du tronçon de tuyau et l'enveloppe intérieure (6) du manchon (3), **caractérisé**
- **en ce que** l'élément formant rondelle d'étanchéité (4) comprend une zone de bordure extérieure et une zone de bordure intérieure qui sont courbées dans le même sens ou dans des sens opposés,
- une force de pression extérieure (P) pouvant être appliquée sur l'élément formant rondelle d'étanchéité (4) à l'aide d'un outil de compression de manière à produire une réduction de diamètre côté intérieur ou une augmentation de diamètre côté extérieur,
- et l'élément formant rondelle d'étanchéité (4) étant apte à être contraint par la force de pression à l'aide d'un élément formant rondelle de pression (7).

2. Raccord de tuyauterie selon la revendication 1, **caractérisé en ce que** plusieurs éléments formant rondelles d'étanchéité (4), séparés par des éléments formant rondelles de pression (7), forment un bloc d'étanchéité.

3. Raccord de tuyauterie selon la revendication 1 ou 2, **caractérisé en ce que** l'élément formant rondelle d'étanchéité est fabriqué à partir d'acier, de métal léger tel que de l'aluminium, de métal non ferreux tel que du cuivre, d'alliages tels que du laiton ou de matière plastique.

4. Raccord de tuyauterie selon l'une des revendications 1 à 3, **caractérisé en ce que** le tronçon de tuyau et/ou le manchon sont fabriqués à partir d'un métal, d'un alliage ou d'une matière plastique.

5. Raccord de tuyauterie selon l'une des revendications 1 à 4, **caractérisé en ce que** le tronçon de tuyau, au moins, est supporté de l'intérieur.

6. Raccord de tuyauterie selon la revendication 5, **caractérisé en ce que** le support se fait grâce à un tube de support ou une douille de support (9).

7. Raccord de tuyauterie selon l'une des revendications 1 à 6, **caractérisé en ce que** le manchon (3) est conçu comme un double manchon d'une seule pièce et en miroir.

8. Raccord de tuyauterie selon l'une des revendications 1 à 7, **caractérisé en ce qu'**en plus de l'élément formant rondelle d'étanchéité (4) et de l'élément formant rondelle de pression (7), un élément de blocage (12) est enfoncé entre le manchon (3) et le tronçon de tuyau.
